# FASCICULE DE BREVET EUROPEEN

(11) **EP 0 968 361 B1**
(45) Date de publication et mention de la délivrance du brevet: **04.09.2002**
(21) Numéro de dépôt: 98909406.5
(22) Date de dépôt: 06.02.1998
(51) Int. Cl.: F02D 35/00

(54) **PROCEDE DE COMMANDE D'UN MOTEUR A COMBUSTION INTERNE EQUIPE D'UN DISPOSITIF DE RECIRCULATION DES GAZ D'ECHAPPEMENT**
VERFAHREN ZUR REGELUNG EINES VERBRENNUNGSMOTORS MIT ABGASRÜCKFÜHRUNG
METHOD FOR CONTROLLING AN INTERNAL COMBUSTION ENGINE EQUIPPED WITH A DEVICE FOR RECYCLING EXHAUST GASES

(30) Priorité: 10.02.1997 FR 9701641
(43) Date de publication de la demande: 05.01.2000
(73) Titulaire: Siemens VDO Automotive S.A.S., 31036 Toulouse cedex 01 (FR)
(72) Inventeur: KERJEAN, Jean-Jacques, F-31400 Toulouse (FR); REMBAUD, Françoise, F-31830 Plaisance du Touch (FR); SALAFIA, Dominique, F-31170 Tournefeuille (FR)
(74) Mandataire: Berg, Peter
(86) Numéro de dépôt international: EP9800667
(87) Numéro de publication internationale: WO98035149

(56) Documents cités:
- EP-A- 0 262 045
- US-A- 4 075 835
- PATENT ABSTRACTS OF JAPAN vol. 018, no. 104 (M-1563), 21 février 1994 & JP 05 302548 A (HONDA MOTOR CO LTD), 16 novembre 1993,
- PATENT ABSTRACTS OF JAPAN vol. 012, no. 374 (M-749), 6 octobre 1988 & JP 63 124849 A (MAZDA MOTOR CORP), 28 mai 1988,
- PATENT ABSTRACTS OF JAPAN vol. 003, no. 148 (M-083), 7 décembre 1979 & JP 54 124119 A (TOYOTA MOTOR CORP), 26 septembre 1979,
- PATENT ABSTRACTS OF JAPAN vol. 007, no. 044 (M-195), 22 février 1983 & JP 57 193739 A (TOYOTA JIDOSHA KOGYO KK), 29 novembre 1982,

## Description

La présente invention est relative à un procédé de commande d'un moteur à combustion interne, et plus particulièrement d'un tel procédé adapté à la commande de la recirculation des gaz d'échappement.

En raison des exigences de dépollution des moteurs à combustion interne, on est amené à opérer une recirculation des gaz d'échappement vers l'admission du moteur dans certains domaines de fonctionnement.

On connaît, par exemple du document FR 2 677 123, un procédé permettant le pilotage et le diagnostic d'un moteur à combustion interne comportant un dispositif de recirculation des gaz d'échappement. Le moteur est classiquement commandé en contrôlant une quantité de carburant délivrée par un injecteur placé dans le collecteur d'admission en fonction de paramètres de fonctionnements tels que la pression dans le collecteur d'admission et le régime du moteur. Une sonde à oxygène placée dans le collecteur d'échappement permet de réguler la richesse du mélange autour de la valeur stoechiométrique. Le moteur comporte en outre un dispositif de recirculation des gaz d'échappement constitué d'une conduite de recirculation reliant le collecteur d'échappement au collecteur d'admission, la dite conduite étant munie d'une vanne permettant de réguler la quantité de gaz d'échappement réintroduit dans l'admission.

Dans certains domaines de fonctionnement pour lesquels il est nécessaire d'obtenir une réduction de la température de combustion dans le cylindre du moteur, on commande donc l'ouverture de la vanne de recirculation afin de réintroduire du gaz neutre dans le mélange. De cette manière, on arrive à réduire les émissions de gaz polluants, comme par exemple les oxydes d'azote dans les gaz d'échappement.

Le document JP-A-54 124 119 suggère de synchroniser la commande de la vanne de recirculation avec les transitions d'un signal d'une sonde à oxygène placée dans le collecteur d'échappement. Cependant, le but poursuivi est la minimisation des variations de couple et ne prend pas en compte la pollution générée par une telle synchronisation.

On a constaté que lors d'une commande d'ouverture ou de fermeture de la vanne de recirculation, il se produisait un pic de polluants susceptible de dépasser les capacités d'épuration d'un pot catalytique placé dans le collecteur d'échappement.

La présente invention a donc pour objet de proposer un procédé de commande d'un moteur à combustion interne plus particulièrement adapté pour réduire ces pics de pollution. On atteint les buts de l'invention au moyen d'un procédé de commande d'un moteur à combustion interne équipé d'un dispositif de recirculation des gaz d'échappement comportant une vanne de recirculation et d'un dispositif de régulation de mélange air/carburant injecté dans le circuit d'admission en fonction du signal d'une sonde à oxygène placée dans le circuit d'échappement. Selon l'invention, on synchronise les commandes de la vanne de recirculation avec au moins une transition d'une correction de la richesse du mélange de manière à ce que l'ouverture de la vanne de recirculation intervient pendant une phase d'enrichissement et/ou la fermeture de la vanne de recirculation intervient pendant une phase d'appauvrissement du mélange air/carburant. Selon l'invention, on synchronise les commandes de la vanne de recirculation avec au moins une transition d'une correction de la richesse du mélange.

Dans un premier mode de réalisation de l'invention, on commande l'ouverture de la vanne dans une première fenêtre temporelle dont le début et la fin sont déterminés de manière à ce que l'ouverture effective de la vanne, définie par une augmentation de la pression d'admission à l'entrée d'un cylindre du moteur consécutivement à l'ouverture de la vanne, intervienne pendant une phase d'enrichissement du mélange air/carburant. Avantageusement, cette première fenêtre temporelle d'autorisation d'ouverture de la vanne est déterminée par deux durées à partir d'une transition de riche à pauvre du mélange, ces durées étant fonction du régime et d'une valeur représentative de la charge du moteur.

De même, on commande la fermeture de la vanne dans une seconde fenêtre temporelle dont le début et la fin sont déterminés de manière à ce que la fermeture effective de la vanne, définie par une diminution de la pression d'admission à l'entrée d'un cylindre du moteur consécutivement à la fermeture de la vanne, intervienne pendant une phase d'appauvrissement du mélange air/carburant. Avantageusement, cette seconde fenêtre temporelle d'autorisation de fermeture de la vanne est déterminée par deux durées à partir d'une transition de pauvre à riche du mélange, ces durées étant fonction du régime et d'une valeur représentative de la charge du moteur.

Dans un second mode de réalisation, les fenêtres temporelles commencent respectivement lors d'une transition de pauvre à riche pour l'ouverture et de riche à pauvre pour la fermeture et se terminent après une cinquième, respectivement sixième durée, les dites durées étant fonction du régime et d'une valeur représentative de la charge du moteur.

D'autres caractéristiques et avantages du procédé suivant l'invention apparaîtront à la lecture de la description qui va suivre et à l'examen des dessins annexés dans lesquels :
- la figure 1 représente un moteur à combustion interne équipé d'un dispositif de recirculation des gaz d'échappement commandé par un calculateur propre à mettre en oeuvre le procédé selon l'invention,
- la figure 2 représente l'architecture fonctionnelle du dit calculateur et
- la figure 3 représente des graphes temporels de signaux permettant d'expliquer le fonctionnement de l'invention.

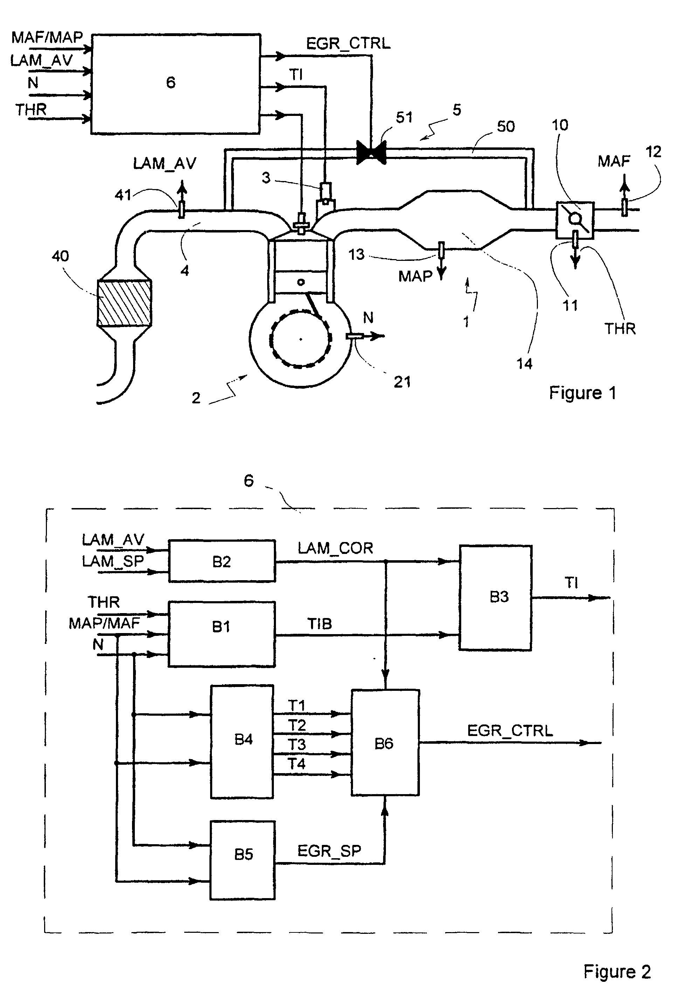

On se réfère maintenant à la figure 1 dans laquelle on a représenté un moteur à combustion interne comportant un collecteur d'admission 1, un bloc moteur 2 et un collecteur d'échappement 4. Le collecteur d'admission comporte un papillon des gaz 10 éventuellement équipé d'un capteur de position angulaire 11 délivrant un signal THR représentatif de la position du papillon. Un capteur de débit massique d'air 12 fournit un signal MAF représentatif de la masse d'air entrant dans le collecteur d'admission. Le collecteur comporte en outre une cavité 14 appelée plenum dans laquelle est placé un capteur de pression absolue 13 délivrant un signal MAP. Le bloc moteur 2 est équipé d'un capteur de régime de rotation 21 fournissant un signal de régime N. Le collecteur d'échappement 4 comporte un pot catalytique 40 destiné à épurer les gaz d'échappement et une sonde à oxygène 41 délivrant un signal LAM_AV représentatif de la teneur en oxygène des gaz d'échappement et donc de la richesse du mélange brûlé dans le moteur.

Le moteur est en outre équipé d'un dispositif de recirculation des gaz d'échappement 5 comportant une tubulure 50 mettant en communication le collecteur d'échappement 4 avec le collecteur d'admission 1 en amont du plenum 14. Une vanne de recirculation 51 est placée dans la tubulure pour contrôler la quantité de gaz d'échappement recirculée à l'admission. On a en outre représenté un calculateur 6 recevant des signaux des différents capteurs MAF/MAP, LAM_AV, N, THR ainsi que d'autres signaux tels que la température d'air entrant dans le moteur, la température du liquide de refroidissement en provenance de capteurs non représentés. Le calculateur fournit également un signal TI de commande d'un injecteur 3 permettant de doser la quantité de carburant fournie au moteur, ainsi qu'un signal EGR_CTRL de commande de la vanne de recirculation des gaz d'échappement.

On a pu constater que les pics de pollution observés lors de la commande de la vanne de recirculation provenaient de l'effet d'une onde de pression obtenue lors de l'ouverture ou de la fermeture de la vanne 51 dans la tubulure 50 et dans le plenum 14. En effet, lors de l'ouverture de la vanne, les gaz d'échappement présents dans le collecteur 4 poussent une colonne d'air dans la tubulure 50 qui provoque une augmentation de la pression partielle d'oxygène à l'entrée du cylindre du moteur 2. De même, lors de la fermeture de la vanne 51, on observe une dépression transitoire dans la tubulure 50 qui se traduit par une baisse de la pression partielle d'oxygène à l'entrée du cylindre. Ces variations de la pression d'oxygène dans le cylindre entraînent des variations de la richesse du mélange brûlé et donc des pics de polluants susceptibles de ne pas être épurés par le pot catalytique 40.

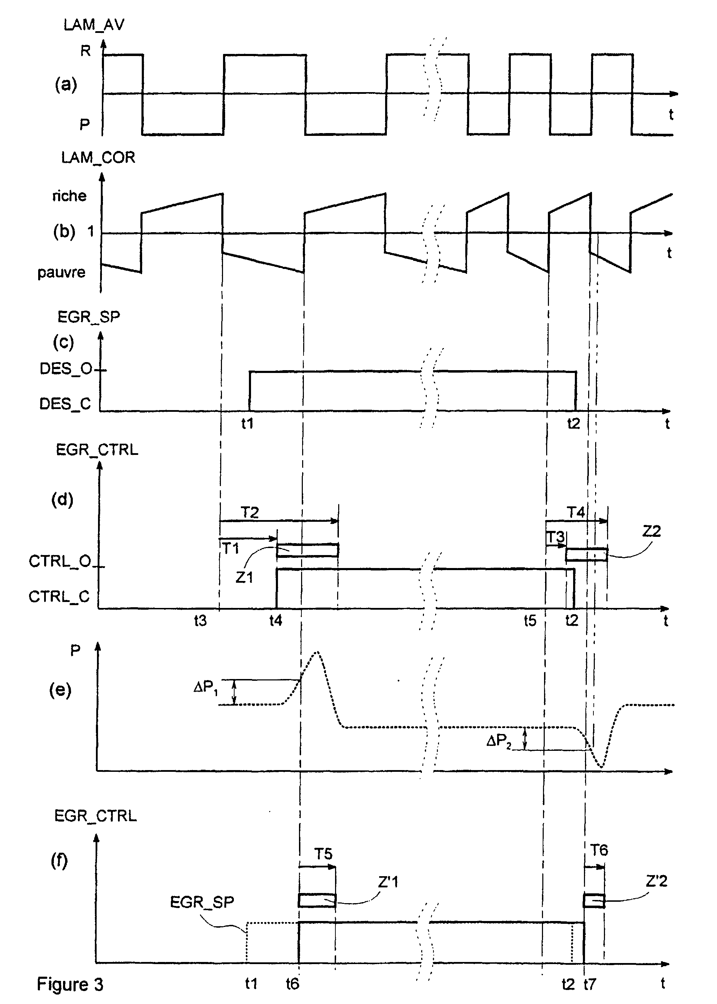

L'invention consiste donc à synchroniser l'effet de ces variations de pression d'oxygène avec des phases d'enrichissement, respectivement d'appauvrissement, de la fourniture de carburant générée par le contrôle en boucle fermée de la richesse du mélange opéré par la sonde à oxygène 41, ainsi qu'on le verra par la suite en relation avec les graphes de la figure 3.

On se réfère maintenant à la figure 2 dans laquelle on a représenté l'architecture fonctionnelle partielle du calculateur 6 pour les parties en relation avec le procédé suivant l'invention. Un premier bloc B1 reçoit les informations en provenance du capteur de pression d'admission MAP et/ou du capteur de débit massique d'air MAF, le régime N, l'ouverture de papillon THR, ainsi que d'autres informations non représentées telles que la température d'air et/ou la température du liquide de refroidissement. Il élabore un temps d'injection de base TIB à partir d'une cartographie obtenue lors d'essais au banc moteur. Un second bloc B2 reçoit le signal LAM_AV en provenance de la sonde à oxygène 41 ainsi qu'une valeur de consigne de richesse LAM_SP et élabore un signal de correction de richesse LAM_COR. Ces deux signaux sont ensuite transmis à un bloc B3 qui élabore classiquement le signal TI de commande de l'injecteur 3. Un quatrième bloc B4 reçoit le signal N représentatif du régime de rotation du moteur ainsi qu'un signal représentatif de la charge moteur. Ce signal peut être déduit de la pression MAP dans le collecteur d'admission ou bien du débit massique MAF d'air d'admission et du régime N ou encore de la position du papillon des gaz THR et du régime. Dans l'exemple qui suit, nous prendrons la pression d'admission MAP comme variable représentative de la charge du moteur. Ce bloc B4 élabore, à partir de ces signaux, quatre durées T1 à T4 issues d'une table mémorisée lors d'essais au banc moteur. La méthode d'élaboration de ces durées sera explicitée plus tard en relation avec la figure 3. Un cinquième bloc B5 reçoit également des signaux représentatifs de la charge moteur ainsi que du régime pour élaborer un signal de consigne EGR_SP de recirculation des gaz d'échappement. Les durées T1 à T4, le signal de consigne EGR_SP et le signal de correction de richesse LAM_COR sont fournis à un bloc B6 pour élaborer un signal de commande EGR_CTRL de la vanne 51.

On se réfère maintenant à la figure 3 pour détailler le procédé de commande selon l'invention. On a représenté, en (a) à la figure 3, un graphe temporel du signal LAM_AV délivré par la sonde de richesse 41. Ce signal présente deux états respectivement notés R et P représentatifs de la combustion d'un mélange riche ou pauvre. Un tel signal est obtenu par exemple au moyen d'une sonde à oxygène de type à oxyde de titane TiO₂ ou à l'oxyde de zirconium ZrO₂.

On a représenté concomitamment en (b) le signal de correction de richesse LAM_COR élaboré par le bloc B2 destiné à corriger le temps d'injection de base TIB dans le bloc B3. Comme on peut le constater sur la figure, lorsque le signal de la sonde 41 est représentatif d'une combustion à mélange pauvre, on opère, au moyen du signal de correction LAM_COR, un enrichissement du mélange par une transition proportionnelle suivie d'une rampe intégrale jusqu'à ce que le signal de la sonde change d'état. On procède ainsi à des phases alternatives d'enrichissement et d'appauvrissement du mélange en fonction de l'état de la sonde.

On a représenté en (c) le signal de consigne EGR_SP de recirculation des gaz d'échappement issus du bloc B5. En fonction des conditions de charge moteur et de régime prévalant à l'entrée du bloc B5, le signal présente un état initial DES_C, par exemple représentatif d'une consigne « absence de recirculation » (vanne fermée). A l'instant t1, on suppose les conditions de régime et de charge telles que la recirculation des gaz d'échappement peut être envisagée. Le signal de consigne EGR_SP prend alors une valeur DES_O représentative d'une consigne d'ouverture. Bien entendu, ces valeurs peuvent être également des valeurs de consigne d'ouverture différentes de « pleine ouverture » ou « pleine fermeture ». On peut par exemple envisager que le signal soit représentatif quantitativement d'un degré d'ouverture désiré de la vanne. A l'instant t2, les conditions de recirculation des gaz d'échappement n'étant plus réunies, le signal de consigne revient à une valeur DES_C correspondant à la fermeture de la vanne.

On en vient maintenant, en relation avec le graphe (d), au fonctionnement du bloc B6. A l'instant t3 correspondant à une transition du signal LAM_COR débutant une phase d'appauvrissement du mélange, le bloc B6 décompte les durées T1 et T2 définissant ainsi à partir du début de la phase d'appauvrissement, une première fenêtre temporelle Z1. Dès l'ouverture de cette fenêtre temporelle, en présence d'un signal de consigne de recirculation à l'état DES_O, le bloc B6 fait passer le signal EGR_CTRL de commande de la vanne 51 de l'état CTRL_C (fermeture) à l'état CTRL_O (ouverture). De même à l'instant t5 correspondant au début d'une phase d'enrichissement du mélange, le bloc B6 décomple des durées T3 et T4 définissant une seconde fenêtre temporelle Z2. A l'instant t2 compris dans la fenêtre temporelle Z2, le signal de consigne EGR_SP passant à l'état DES_C, le signal EGR_CTRL de commande de la vanne passe également à l'état CTRL_C représentatif d'une fermeture de la vanne 51.

Comme on l'a vu précédemment, l'ouverture de la vanne 51 provoque une onde de pression dans la tubulure 50 et dans le plenum 14 générant une surpression transitoire d'oxygène à l'entrée du cylindre du moteur. Ainsi qu'on peut le voir sur le graphe (e) de la figure 3 où l'on a représenté en ordonnée la pression partielle d'oxygène et en abcisse le temps, à l'ouverture de la vanne à l'instant t4, la pression partielle d'oxygène augmente. Cette augmentation transitoire a pour effet de provoquer des combustions en mélange pauvre qu'il convient d'estomper en synchronisant le pic de pression avec une transition de la correction du mélange air/carburant vers un mélange riche. Cependant, compte tenu de paramètres tels que la géométrie du circuit d'admission et la dynamique des gaz, l'effet de l'ouverture de la vanne ne se fait pas sentir immédiatement à l'entrée du cylindre. On détermine alors une ouverture effective de la vanne par l'instant auquel la surpression d'oxygène atteint un seuil prédéterminé ΔP₁. On définit ainsi la durée T1 de telle sorte qu'une ouverture de la vanne, se produisant immédiatement après T1, ne provoque son effet dans le cylindre qu'après une transition de pauvre à riche du signal LAM_COR déterminant le début d'une phase d'enrichissement du mélange. De même, on définit la durée T2 de telle sorte qu'une ouverture de la vanne 51, intervenant à la fin de la durée T2, conduise à une ouverture effective de la vanne se produisant avant la fin de cette phase d'enrichissement du mélange air/carburant. Les durées T1 et T2 sont déterminées dans une table en fonction des paramètres de régime et de charge par des essais au banc moteur, lors de la mise au point de celui-ci. On détermine de manière analogue les durées T3 et T4 pour la fermeture de la vanne qui cause symétriquement une baisse transitoire de la pression partielle d'oxygène, afin qu'une fermeture de la vanne à l'intérieur de la deuxième fenêtre temporelle Z2 produise son effet pendant la phase suivante d'appauvrissement du mélange. On génère ainsi des fenêtres temporelles d'autorisation de commande d'ouverture Z1 (respectivement de commande de fermeture Z2) à chaque transition du signal de correction de richesse LAM_COR de riche à pauvre (respectivement de pauvre à riche). Une commande d'ouverture ou de fermeture de la vanne 51 n'est produite pendant ces fermetures temporelles que si le signal de consigne EGR_SP a changé d'état immédiatement avant ou pendant cette fermeture.

On va maintenant décrire, en relation avec le graphe (f) de la figure 3, un second mode de réalisation de l'invention. Selon ce mode de réalisation, le début de la première fenêtre temporelle Z'1 est déterminée par une transition de pauvre à riche du mélange air/carburant. La fin de la fenêtre temporelle Z'1 est obtenue après une cinquiérme durée T5 telle que l'effet d'une ouverture de la vanne soit ressenti pendant la phase d'enrichissement commençant à cette transition. De même, on synchronise le début de la deuxième fenêtre temporelle Z'2 avec une transition de riche à pauvre du mélange à l'instant t7. Cette seconde fenêtre temporelle Z'2 se termine au bout d'une durée T6 calculée de telle sorte que l'effet d'une fermeture de la vanne 51 à la fin de la fenêtre reste inclus dans la même phase d'appauvrissement du mélange. Ce mode de réalisation de l'invention présente l'avantage, sur le mode précédent, de nécessiter une puissance de calcul et une capacité de mémorisation moindre du dispositif de mise en oeuvre.

Bien entendu, l'invention n'est pas limitée au mode de réalisation décrit, mais pourrait encore être réalisé en déterminant les durées T1 à T4 et T5 et T6 en fonction de l'invervalle de temps séparant deux transitions consécutives de riche à pauvre ou de pauvre à riche du signal de correction du mélange.

## Revendications

1. Procédé de commande d'un moteur à combustion interne équipé d'un dispositif de recirculation (5) des gaz d'échappement comportant une vanne (51) de recirculation et d'un dispositif de régulation d'un mélange air / carburant injecté dans un circuit d'admission en fonction du signal (LAM_AV) d'une sonde à oxygène (41) placée dans le circuit d'échappement (4), selon lequel on synchronise les commandes (EGR_CTRL) de la vanne avec une transition d'une correction (LAM_COR) de la richesse du mélange, **caractérisé en ce que** l'ouverture de la vanne de recirculation intervient pendant une phase d'enrichissement et/ou la fermeture de la vanne de recirculation intervient pendant une phase d'appauvrissement du mélange air/carburant.

2. Procédé selon la revendication 1, **caractérisé en ce que** l'on commande l'ouverture de la vanne dans une première fenêtre temporelle (Z1, Z'1) dont le début et la fin sont déterminées de manière à ce que l'ouverture effective de la vanne, définie par une augmentation de la pression d'admission à l'entrée d'un cylindre du moteur consécutivement à l'ouverture de la vanne supérieure à un seuil prédéterminé (ΔP₁), intervienne pendant une phase d'enrichissement du mélange air / carburant.

3. Procédé selon la revendication 1, **caractérisé en ce que** l'on commande la fermeture de la vanne dans une seconde fenêtre temporelle (Z2, Z'2) dont le début et la fin sont déterminées de manière à ce que la fermeture effective de la vanne, définie par une diminution de la pression d'admission à l'entrée d'un cylindre du moteur consécutivement à la fermeture de la vanne supérieure à un seuil prédéterminé (ΔP₂), intervienne pendant une phase d'appauvrissement du mélange air / carburant.

4. Procédé selon la revendication 2, **caractérisé en ce que**
• la première fenêtre temporelle (Z1) commence au bout d'une première durée (T1) après une transition de riche à pauvre du mélange
• la première fenêtre temporelle se termine au bout d'une seconde durée (T2) après la même transition de riche à pauvre du mélange
• les première et seconde durées sont fonction du régime (N) et d'une valeur (MAP) représentative de la charge du moteur.

5. Procédé selon la revendication 3, **caractérisé en ce que** :
• la seconde fenêtre temporelle (Z2) commence au bout d'une troisième durée (T3) après une transition de pauvre à riche du mélange,
• la seconde fenêtre temporelle se termine au bout d'une quatrième durée (T4) après la même transition de pauvre à riche du mélange,
• les troisième et quatrième durées sont fonction du régime (N) et d'une valeur (MAP) représentative de la charge du moteur.

6. Procédé selon la revendication 2, **caractérisé en ce que** :
• la première fenêtre temporelle (Z'1) commence lors d'une transition de pauvre à riche du mélange,
• la première fenêtre temporelle se termine au bout d'une cinquième durée (T5) après la même transition de pauvre à riche du mélange,
• la cinquième durée est fonction du régime (N) et d'une valeur (MAP) représentative de la charge du moteur.

7. Procédé selon la revendication 3, **caractérisé en ce que** :
• la seconde fenêtre temporelle (Z'2) commence lors d'une transition de riche à pauvre du mélange,
• la seconde fenêtre temporelle se termine au bout d'une sixième durée (T6) après la même transition de riche à pauvre du mélange,
• la sixième durée est fonction du régime (N) et d'une valeur (MAP) représentative de la charge du moteur.

## Patentansprüche

1. Verfahren zum Steuern einer Brennkraftmaschine mit einer Abgasrückführvorrichtung (5), die ein Rückführventil (51) aufweist, und mit einer Vorrichtung zum Regeln eines in einen Ansaugtrakt zugeführten Luft/Kraftstoff-Gemischs in Abhängigkeit von dem Signal (LAM_AV) einer Sauerstoffsonde (41), die in dem Abgastrakt (4) angeordnet ist, bei welchem man die Steuerbefehle (EGR_CTRL) des Ventils mit einem Übergang einer Korrektur (LAM_COR) der Luftzahl des Gemischs synchronisiert, **dadurch gekennzeichnet, dass** das Rückführventil während einer Fettphase geöffnet und/oder das Rückführventil während einer Magerphase des Luft/Kraftstoff-Gemischs geschlossen wird.

2. Verfahren nach Anspruch 1, **dadurch gekennzeichnet, dass** das Ventil in einem ersten Zeitfenster (Z1, Z'1) geöffnet wird, dessen Beginn und Ende so bestimmt werden, dass die wirksame Öffnung des Ventils, definiert durch einen Anstieg des Einlassdrucks am Einlass eines Motorzylinders als Folge der Ventilöffnung, welcher größer als eine vorgegebene Schwelle (ΔP₁) ist, während einer Fettphase des Luft/Kraftstoff-Gemischs erfolgt.

3. Verfahren nach Anspruch 1, **dadurch gekennzeichnet, dass** das Ventil in einem zweiten Zeitfenster (Z2, Z'2) geschlossen wird, dessen Beginn und Ende so bestimmt werden, dass die wirksame Schließung des Ventils, definiert durch einen Abfall des Einlassdrucks am Einlass eines Motorzylinders als Folge der Ventilschließung, welcher größer als eine vorgegebene Schwelle (ΔP₂) ist, während einer Magerphase des Luft/Kraftstoff-Gemischs erfolgt.

4. Verfahren nach Anspruch 2, **dadurch gekennzeichnet, dass**
- das erste Zeitfenster (Z1) am Ende einer ersten Zeitspanne (T1) nach einem Übergang von einem fetten zu einem mageren Gemisch beginnt,
- das erste Zeitfenster am Ende einer zweiten Zeitspanne (T2) nach demselben Übergang von einem fetten zu einem mageren Gemisch endet,
- die erste und zweite Zeitspanne eine Funktion der Drehzahl (N) und eines die Motorlast darstellenden Wertes (MAP) sind.

5. Verfahren nach Anspruch 3, **dadurch gekennzeichnet, dass**
- das zweite Zeitfenster (Z2) am Ende einer dritten Zeitspanne (T3 nach einem Übergang von einem mageren zu einem fetten Gemisch beginnt,
das zweite Zeitfenster am Ende einer vierten Zeitspanne (T4) nach demselben Übergang von einem mageren zu einem fetten Gemisch endet, die dritte und vierte Zeitspanne eine Funktion der Drehzahl (N) und eines die Motorlast darstellenden Wertes (MAP) sind.

6. Verfahren nach Anspruch 2, **dadurch gekennzeichnet, dass**
- das erste Zeitfenster (Z'1) während eines Übergangs von einem mageren zu einem fetten Gemisch beginnt,
- das erste Zeitfenster am Ende einer fünften Zeitspanne (T5) nach demselben Übergang von einem mageren zu einem fetten Gemisch endet,
- die fünfte Zeitspanne eine Funktion der Drehzahl (N) und eines die Motorlast darstellenden Wertes (MAP) ist.

7. Verfahren nach Anspruch 3, **dadurch gekennzeichnet, dass**
- das zweite Zeitfenster (Z'2) während eines Übergangs von einem fetten zu einem mageren Gemisch beginnt,
- das zweite Zeitfenster am Ende einer sechsten Zeitspanne (T6 nach demselben Übergang von einem fetten zu einem mageren Gemisch endet,
- die sechste Zeitspanne eine Funktion der Drehzahl (N) und eines die Motorlast darstellenden Wertes (MAP) ist.

## Claims

1. Method for controlling an internal combustion engine fitted with a recirculation device (5) for exhaust gas, comprising a recirculation valve (51) and a device to regulate an air/fuel mixture injected into an intake circuit as a function of the signal (LAM_AV) of an oxygen sensor (41) located in the exhaust circuit (4), according to which valve control (EGR_CTRL) is synchronised with a transition (LAM_COR) to correct the richness of the mixture, **characterised in that** the opening of the recirculation valve takes place during an enrichment phase and/or the closing of the recirculation valve takes place during a depletion phase of the air/fuel mixture.

2. Method according to Claim 1, **characterised in that** the opening of the valve is controlled in a first time window (Z1, Z'1), the start and end of which are determined such that the actual opening of the valve, defined by an increase in the intake pressure at the engine cylinder intake, following the opening of the valve, above a predefined threshold (ΔP₁), takes place during an enrichment phase of the air/fuel mixture.

3. Method according to Claim 1, **characterised in that** the closing of the valve is controlled in a second time window (Z2, Z'2), the start and end of which are determined such that the actual closing of the valve, defined by a drop in intake pressure at the engine cylinder intake, following the closing of the valve, above a predefined threshold (ΔP₂), takes place during a depletion phase of the air/fuel mixture.

4. Method according to Claim 2, **characterised in that**
• the first time window (Zl) starts at the end of a first period (T1) after a transition from rich to poor of the mixture
• the first time window ends at the end of a second period (T2) after the same transition from rich to poor of the mixture
• the first and second periods are a function of the speed (N) and a value (MAP) representing engine load.

5. Method according to Claim 3, **characterised in that**:
• the second time window (Z2) starts at the end of a third period (T3) after a transition from poor to rich of the mixture
• the second time window ends at the end of a fourth period (T4) after the same transition from poor to rich of the mixture
• the third and fourth periods are a function of the speed (N) and a value (MAP) representing engine load.

6. Method according to Claim 2, **characterised in that**:
• the first time window (Z'1) starts during a transition from poor to rich of the mixture
• the first time window ends at the end of a fifth period (T5) after the same transition from poor to rich of the mixture
• the fifth period is a function of the speed (N) and a value (MAP) representing engine load.

7. Method according to Claim 3, **characterised in that**:
• the second time window (Z'2) starts during a transition from rich to poor of the mixture
• the second time window ends at the end of a sixth period (T6) after the same transition from rich to poor of the mixture
• the sixth period is a function of the speed (N) and a value (MAP) representing engine load.
